# EUROPEAN PATENT SPECIFICATION

(11) **EP 1 917 868 B1**
(45) Date of publication and mention of the grant of the patent: **30.05.2018**
(21) Application number: 08002358.3
(22) Date of filing: 27.04.2006
(51) Int. Cl.: A23L 29/219, A23L 7/10, A21D 6/00

(54) **Rice flour composition with enhanced process tolerance and solution stability**
Reismehlzusammensetzung mit erhöhter Verarbeitungstoleranz und Lösungsstabilität
Composition de farine de riz avec une tolérance au procédé et une stabilité en solution améliorées

(30) Priority: 29.04.2005 US 676585 P; 22.06.2005 US 692833 P; 10.04.2006 US 401004
(43) Date of publication of application: 07.05.2008
(62) Divisional of application: 06008757.4
(73) Proprietor: CORN Products Development Inc., Westchester, IL 60154 (US)
(72) Inventor: Shariff, Roxanna, Bound Brook, New Jersey 08805 (US); Bindzus, Wolfgang, Hatfield Hertfordshire AL10 9JJ (GB); Shi, Yong-Cheng, Manhattan KS 66503 (US); Shah, Tarak, Union City New Jersey 07087 (US); Green, Vincent, Easton Pennsylvania 18040 (US)
(74) Representative: Held, Stephan

(56) References cited:
- US-A- 4 508 736
- US-B1- 6 221 420
- HSI-MEI LAI: "Effects of hydrothermal treatment on the physicochemical properties of pregelatinized rice flour.", FOOD CHEMISTRY, vol. 72, no. 4, 2001, pages 455-463, XP002392069, taiwan
- TAKAHASHI T ET AL: "EFFECT OF HEAT TREATMENT ON PHYSIOCOCHEMICAL PROPERTIES OF RICE FLOUR", NIPPON SHOKUHIN KAGAKU KOGAKU KAISHI, vol. 49, no. 12, 2002, pages 757-764, XP008067093, JP ISSN: 1341-027X
- TAKAHASHI T ET AL: "PHYSICOCHEMICAL PROPERTIES OF PASTES AND GELS OF HEAT-TREATED RICE FLOUR", NIPPON SHOKUHIN KAGAKU KOGAKU KAISHI, vol. 50, no. 5, 2003, pages 230-236, XP008067092, JP ISSN: 1341-027X
- KAREN L. BETT-GARBER, ELAINE T. CHAMPAGNE, ANNA M. MCCLUNG, KAREN A. MOLDENHAUER, STEVE D. LINSCOMBE, KENT S. MCKENZIECEREAL C: "Categorizing Rice Cultivars Based on Cluster Analysis of Amylose Content, Protein Content and Sensory Attributes", CEREAL CHEMISTRY, vol. 78, no. 5, 2001, pages 551-558, XP002627971,
- RADHIKA REDDY K ET AL: "Viscoelastic properties of rice-flour pastes and their relationship to amylose content and rice quality.", CEREAL CHEMISTRY, vol. 71, no. 6, 1994, page 548, XP002392070, india

## Description

### BACKGROUND OF THE INVENTION

The present invention relates to a rice flour composition with enhanced process tolerance and solution stability, the method of making such rice flour, and a composition comprising the flour. The rice flour is prepared by heat-moisture treatment of a low amylose rice flour.

Flour is typically composed of starch, protein, lipids, fiber and other materials. Starch, typically the primary component of flour, is a complex carbohydrate composed of two types of polysaccharide molecules, amylose, a mostly linear and flexible polymer of D-anhydroglucose units that are linked by alpha-1,4-D-glucosidic bonds, and amylopectin, a branched polymer of linear chains that are linked by alpha-1,6-D-glucosidic bonds.

Native flours or starches are often inadequate to meet the demanding needs of the food industry in processed foods. Starches are often chemically modified by numerous techniques known in the industry to change the functionality of the starch and meet these needs. In particular, chemical modifications are often made to increase process tolerance and stability in an aqueous dispersion or high moisture food.

When an aqueous dispersion of native starch is heated, the starch granules begin to swell, and the dispersion develops a cohesive, salve-like texture. During the process of cooking native starches, this textural state rapidly changes to an elastic, rubbery state in which the swollen granules rupture. Minor variations in cooking time, temperature, and concentration as well as shear and pH are sufficient to effect this transformation. Certain types of chemical modification may be used to overcome the extreme sensitivity of the swollen starch granules to handling and processing conditions.

In recent years there has been a trend toward developing starches which have all the properties of a modified starch, but with much lower levels of, or even no, chemical treatment. For example, attempts have been made to increase the low temperature stability of starches by using beta-amylase to enzymatically hydrolyze cross-linked waxy starches (Wurzburg, U.S. Pat. No. 3,525,672). Such hydrolysis shortens or removes the outermost beta-chains of the starch molecule. Thus, the possibility of association on the part of these branches is lessened, resulting in significant reduction of syneresis and gelling of the food products during exposure to low or freezing temperatures.

Compared to the option to use a wide variety of established modified starches in order to meet the often sophisticated needs of food processing as well as consumer demands, the food industry has limited options to use flours which display a high level of functionality, including in processed high moisture foods. When used in high moisture foods, native flours are known to show variability in viscosity and other undesirable attributes under food processing conditions. Further, just like native starch, native flour has the tendency to contribute to undesirable long and cohesive textures and has poor stability in processed high moisture foods.

Known technical solutions to improve the functionality of flours in high moisture foods include hybrid selection and physical processing. For example, waxy flour can be used to improve the stability of processed foods. However, such a food does not have a high level of process tolerance and tends to develop an inferior, cohesive, gelled texture.

Heat-moisture treatment of flours is known in the art to enhance the process tolerance of flours containing amylose through the process of annealing. However, such flours display poor stability when used in high moisture foods.

Takahashi et al, "Effects of Heat Treatment on Physicochemical Properties of Rice flour", Nippon Shokuhin Kagaku Kogaku Kashi (2002), 49(12), pp. 757-764 describes the properties of Akitakomachi rice flours (having an amylose content of about 17% by weight of the starch), which were subjected to heat moisture treatment at temperatures between 100 and 120°C for 60 Min. In the investigations it was found that the swelling power of the rice flours was considerably suppressed and that the peak viscosity decreased with increasing the temperature of the heat-moisture treatment.

In the later publication Takahashi et al, "Physicochemical Properties of Pastes and Gels of Heat-treated Rice flours" Nippon Shokuhin Kagaku Kogaku Kashi (2003), 50(5), pp. 230-236, the effects of heat moisture treatment of Akitakomachi rice flours were investigated for treatments performed at 120°C and 160°C. In these investigations, it was found that the starches treated with higher temperatures had a higher Storage Modulus (G') and that the flours treated at 120°C yielded smaller breaking strain, larger breaking stress and were harder and more brittle.

US 4,508,736 discloses a method for the preparation of a rice flour having an amylose content of less than 20 % which is hydrated with water to improve the baking performance. In the process of US 4,508,736 a flour/water mixture in a ration of e.g. 100/80 is subjected to a temperature of -25°C to 77°C until the starch has sufficiently hydrated.

His-Mei L. in "Effects of hydrothermal treatment on the physicochemical properties of pregelatinized rice flour", Food Chemistry 72 (2002), pp. 455-463 discusses the impact of the soaking time, steaming temperature and steaming time on the pasting temperature, reduction of peak viscosity and the elevation of final viscosity of rice flours having amylose contents of 1.2 %, 17.9 % and 28.8 %, respectively. The observed differences of pasting and hydration properties of the treated rice flours were attributed to changes of rigidity of the treated starch granules. It was also found that the treated waxy and non-waxy rice varieties responded differently under the same conditions of hydrothermal treatment.

US 6,221,420 relates to thermally inhibited starches and flours for use as an ingredient of foods. The starches and flours are prepared by dehydrating the starch to flour to < 1% residual moisture and thermally inhibiting the starch of flour to a desired degree.

Radhiky Reddy, K. et al in "Viscoelastic properties of rice flour pastes and their relationship to amylose content and rice quality", Cereal Chemistry 1994, 71(6): 548-552, discuss the dynamic viscoelastic behavior of non-waxy rice-flour pastes.

Bett-Garber, K.L. et al in "Categorizing Rice cultivar Based on Cluster Analysis of Amylose Content, protein Content and Sensory Attributes", Cereal Chemistry 2001, 78(5): 551-558, Analysed the Amylose and Protein content of various Rice varieties.

Surprisingly, it has now been discovered that heat-moisture treatment of a low amylose rice flour results in flour which has unique and useful properties, specifically enhanced process tolerance and solution stability.

### SUMMARY OF THE INVENTION

The present invention relates to a non-gelling amylose-containing rice flour with enhanced process tolerance and solution stability, the method of making such rice flour, and a composition comprising the flour. The rice flour is prepared by heat-moisture treatment of a low amylose rice flour. This flour can be used in food products which contain the rice flour, particularly processed foods with high moisture levels.

Flour, as used herein, is intended to mean, a multicomponent composition which includes starch and may include protein, fat (lipids), fiber, vitamins and/or minerals. Flour is intended to include, without limitation, meal, wholemeal, cone, grits, and flaking grits, but is not intended to include pure starch.

Low amylose, as used herein, is intended to mean an amylose content lower than 18-25% (common rice flour), but higher than about 3% (common waxy rice flour), i.e. an amylose content of from 5 to 15% amylose based upon the weight of the starch in the flour.

Process tolerance, as used herein, is intended to mean that the flour, when exposed to heat, shear and/or acidic conditions during processing in a high moisture environment, such as in a high moisture food, will have a short, non-cohesive texture and a viscosity significantly higher than that of the native flour.

Solution stability, as used herein, is intended to mean that the flour remains stable and does not gel in a high water (moisture) environment. Specifically, using a flour in which the starch has been fully cooked out (gelatinized) in an aqueous solution at 9% solids and a pH of 3, a spoonful may be taken out of the solution and a divot will not form or will fill back in again within five minutes, such that the solution levels out again.

Gelatinization, as used herein, is intended to mean the process by which starch is cooked out and loses its granular structure. Granular is intended to mean the structure of native starch in which the starch is not water soluble, at least partially crystalline, and may have birefringence and a Maltese cross under polarized light.

Protein denaturation, as used herein, is intended to describe a noncovalent change in the protein structure. Such change may alter the secondary, tertiary or quaternary structure of the protein polymer.

### BRIEF DESCRIPTION OF THE FIGURES

Figure 1 depicts modulus (G') data of various heat-moisture treated amylose containing flours cooked by Rheology Method B2 (see Examples for details).
Figure 2 depicts Brabender viscosity of native and heat-moisture treated waxy and low amylose rice flours under neutral conditions (pH = 6.5).
Figures 3 to 8 depict the texture ballot used in evaluating samples in the Examples section.

### DETAILED DESCRIPTION OF THE INVENTION

The present invention relates to a non-gelling amylose-containing rice flour with enhanced process tolerance and solution stability, the method of making such rice flour, and uses thereof. The rice flour is prepared by heat-moisture treatment of a non-gelling amylose-containing rice flour.

The rice flour used in preparing the present invention is derived from native sources. Native, as used herein, is one as it is found in nature. Also suitable are flours derived from a plant obtained by standard breeding techniques including crossbreeding, translocation, inversion, transformation or any other method of gene or chromosome engineering to include variations thereof. In addition, starch derived from a plant grown from induced mutations and variations of the above generic composition which may be produced by known standard methods of mutation breeding are also suitable herein.

The non-gelling amylose-containing rice flour suitable in the present invention has a starch component with a low amylose content. Specifically, the variations of the above generic composition which may be produced by known standard methods of mutation breeding are also suitable herein.

The non-gelling amylose-containing rice flour suitable in the present invention has a starch component with a low amylose content. Specifically, the flour is a rice flour and has between 5 and 15%, and in another embodiment between 10 and 13% amylose content, and in yet another embodiment 13-15%, by weight of the starch in the flour.

The flour may be derived from the plant material by any method used in the art of manufacturing flour, and in one embodiment is derived by dry milling. However, other methods, including combinations of wet and dry milling techniques may be used.

In one embodiment, the flour will contain about 8-25% moisture, 1-50% protein, 0.1-8% fat (lipids), 1-50% fiber, 20-90% starch, 0-3% ash and optionally, other components such as nutrients (e.g. vitamins and minerals). The particle size may be varied as may the percents of the components using methods known in the art. For example, fine grinding and air classification may be used to alter the protein content. Flour is intended to include, without limitation, white flour, wholemeal flour, wholegrain flour, and grits.

In preparing the rice flour of this invention it is necessary that the starting flour have a specified amount of water or moisture content and is heated to a defined temperature in order to accomplish the goal of enhanced process tolerance and solution stability. The total moisture or water content of the starch to be heat treated will be in the range of from about 10 to 80%, and in one embodiment will be in the range of 15 to 30%, by weight of the dry flour. In another suitable embodiment, the level of moisture is substantially maintained during the heating step. This may be accomplished, for example, by heat treating the flour in a sealed vessel to avoid water evaporation. In another embodiment, the heat treatment has a drying effect and reduces the moisture content of the flour during processing.

The flour with specified moisture content is heated to a target temperature of from 80 to 120°C. It is important that the starch of the flour remain in the granular state. Other changes may occur, including denaturation of the protein. The time of heating can vary depending on the composition of the flour, including the starch and protein content, the particle size distribution, the amylose content of the starch component, and the level of enhancement of the process tolerance desired as well as the amount of moisture and the heating temperature. The heating time at target temperature will be from 1 to 150 minutes, and preferably from 30 to 120 minutes.

The heat treatment may be conducted using any equipment known in the art which provides sufficient capabilities for powder processing, moisture addition and moisture control, mixing, heating and drying. The heat treatment may be done as a batch or a continuous process. In one embodiment, the equipment is a batch ploughshare mixer. In another embodiment, the equipment is a continuous solid-liquid mixer followed by a continuous heated conveyer screw. In yet another embodiment, the continuous process uses a tubular thin film dryer by itself or in combination with a continuous screw to extend and control the residence time. Any system used may be pressurized to control the moisture content at target temperatures at or above 100°C.

The conditions for treating the flour must be such that the granular structure of the starch within the flour is not destroyed. In one embodiment, the granules are still birefringent and there is evidence of a maltese cross when the granular structure of the starch is viewed under polarized light. Under some conditions, such as at high moisture and high temperature, the starch granule may be partially swollen but the crystallinity is not completely destroyed. However, this should be minimized in order to maintain the highest possible process tolerance. Accordingly, the term "granular starch" as used herein, means a starch which predominantly retains its granular structure and has some crystallinity, and the granules may be birefringent and the maltese cross may be evident under polar light. Further, the denaturing effect of the heat-moisture treatment on the protein component may have an impact on the observed functionality of the flour. The resulting starch product which has been heat treated will still have at least some granular structure and in one embodiment will be birefringent when viewed under the microscope and have a maltese cross when viewed under polarized light.

The rice resultant flour will have enhanced process tolerance and solution stability. The rice flour is process tolerant such that when exposed to heat, shear and/or acidic conditions during processing in a high moisture environment, such as in a high moisture food, it will have a short, non-cohesive texture and a viscosity significantly higher than that of the native flour and, if modified prior to heat-moisture treatment, higher than prior to such treatment. High moisture environment or food, as used herein, means with at least 50% water (moisture) by weight of the environment or food and would include a solution or sol of such flour. In one aspect of the invention, the viscosity of the flour after heat-moisture treatment (in water at 9% solids) will have a viscosity at least five times higher than the native flour and in another aspect, at least about eight times higher.

In one embodiment the rice flour will have an absorbance value of at least 0.1, and less than 0.3 using Absorbance Method C1. In another embodiment, the rice flour will have an absorbance value of greater than 0.1, and less than 0.2 using Absorbance Method C2.

The resultant rice flour will also have solution stability in that the rice flour remains stable and does not gel in a high water (moisture) environment. Specifically, using a flour in which the starch has been fully cooked out (gelatinized) in an aqueous solution at 9% solids and a pH of 3, a spoonful may be taken out of the solution and a divot will not form or will not fill back in again within five minutes, such that the solution levels out again.

The resultant rice flour, after its starch has been fully cooked out at 9% solids and a pH of 3, is characterized by a modulus (G') of greater than 250 and less than 600 Pa using Rheology Method B2.

The resultant flour, after its starch has been fully cooked out at 9% solids and a pH of 3, is further characterized by a tangent delta (tan δ) of greater than 0.10 and less than 0.50 using Rheology Method B2. Generally, starches having a tangent delta of greater than 1 are known to be fluid-like or viscous while those with a tangent delta of below 1 can be either soft sets or strong gels. While soft set samples may have tangent delta between 0.1 and 0.5, more strongly gelled samples will have tangent delta less than 0.1. The modulus and tangent delta characteristics are more exactly defined as measured in the Examples section.

After the heat-moisture treatment, the flour may be allowed to air dry to reach equilibrium moisture conditions or may be dried using a flash dryer or other drying means, including spray drying, freeze-drying, or drum drying. In one embodiment, the flour is air dried or flash dried. The pH of the flour may also be adjusted and is typically adjusted to between 6.0 and 7.5.

The flour may be further modified, chemically, physically and or enzymatically to provide additional functionality or desirable properties. Such modification may be accomplished prior to and/or after heat-moisture treatment. In one embodiment the flour is not further modified and in another is modified after the heat-moisture treatment.

Chemical modifications include treatment with any reagent or combination of reagents provided the modification does not fully destroy the granular nature of the starch and is intended to include without limitation crosslinked starches, acetylated and organically esterified starches, hydroxyethylated and hydroxypropylated starches, phosphorylated and inorganically esterified starches, cationic, anionic, nonionic, and zwitterionic starches, and succinate and substituted succinate derivatives of starch. Such modifications are known in the art, for example in Modified Starches: Properties and Uses, Ed. Wurzburg, CRC Press, Inc., Florida (1986). Other suitable modifications and methods are disclosed in U.S. Pat. Nos. 4,626,288, 2,613,206 and 2,661,349. However, it should be noted that while crosslinking may enhance the process tolerance and or solution stability, the invention does not include those embodiments in which the crosslinking alone is sufficient to obtain the desired effect.

In one embodiment, the flour is not chemically modified. This has the added advantage of clean labeling.

Physical modification is intended to include shearing and other physical changes which are known in the art and may be carried out on flour. In one aspect of the invention, the particle size distribution of the flour prior to or after heat-moisture treatment is modified through methods known in the art, such as grinding and sieving, agglomeration, or granulation. In another aspect, the composition of the flour is modified though the use of fine grinding and air classification.

Enzymatic modification is intended to include modification by any enzyme so long as it can hydrolyze without destroying the granular structure of the starch within the flour and includes hydrolysis of the starch and/or of the proteins present in the flour.

The flour may also be subjected to other processes known in the art of starch or flour, such as conversion by acid and/or heat and oxidation. The flour may be purified using methods known in the art, to remove starch off flavors, odors, or colors that are native to the flour or created during processing. Alkali washing techniques are also useful and known in the art.

The resultant rice flour of this invention may be used in any food or beverage composition (hereinafter collectively referred to as foods). This includes foods for human and/or animal consumption. Typical food products include, but are not limited to, baby foods, soups, sauces, dressings, gravies, ready meals, dairy products, and other high moisture foods. Food processing may include mixing, shearing, cooking, retorting, UHP processing, freezing or other known food processing methods. Further, the flours may be suitable for other foods such as cereals such as ready-to-eat, puffed or expanded cereals and cereals which are cooked before eating; baked goods such as breads, crackers, cookies, cakes, muffins, rolls, pastries and other grain-based ingredients; pasta; beverages; fried and coated foods; snacks; meat products; condiments; and cultured dairy products such as yogurts, cheeses, and sour creams.

The amount of non-gelling amylose-containing rice flour which can be added and used in any given food will be determined to a great extent by the amount that can be tolerated from a functional standpoint. In other words, the amount of flour used generally will be as high as will be acceptable in organoleptic evaluation of the food. The flour can be used at about 0.1 to 50%, by weight of the food and in particular from about 1 to 25% by weight. The inventive composition will additional contain at least one other edible component. Such edible components are known in the art and include without limitation proteins, carbohydrates, fats, vitamins and minerals.

The following embodiments are presented to further illustrate and explain the present invention.
1. A non-gelling amylose-containing rice flour characterized by:
   (a) an absorbance value of less than 0.2 and greater than 0.1 by Absorbance Method C2;
   (b) a G' of greater than 250Pa and less than 600Pa; and
   (c) a tan delta of greater than 0.10 and less than 0.50; wherein the modulus and tangent delta are measured using Rheology Method B2,
   wherein the starch in the flour retains its granular structure and
   wherein the flour is a rice flour with an amylose content of from 5 to 15% by weight of starch in the flour.
2. The flour of embodiment 1, wherein the amylose content is from 13 to 15% by weight of starch in the flour.
3. The flour of embodiment 1, wherein the flour is not chemically unmodified.
4. A composition comprising the flour of embodiment 1 and at least one other edible component.
5. A process of heat-treating flour for the production of a non-gelling amylose containing rice flour according to embodiment 1 comprising:
   heating a rice flour under the conditions of a moisture content of between from 10 to 80% by weight of the dry flour, at a target temperature of from 80 to 120°C, and a time of 1 to 150 minutes at the target temperature to form a heat-treated flour;
   wherein the conditions are chosen so that the starch in the flour retains its granular structure;
   wherein the heat-treated flour is characterized by an absorbance value of less than 0.2 and greater than 0.1 by Absorbance Method C2, a G' of greater than 250Pa and less than 600Pa, and a tan delta of greater than 0.10 and less than 0.50; wherein the modulus and
   tangent delta are measured using Rheology Method B2, and . wherein the flour has an amylose content of from 5 to 15% by weight of starch in the flour.
6. The process of embodiment 5, wherein the flour has an amylose content of from 13 to 15% by weight of starch in the flour.
7. The process of embodiment 5, wherein the moisture of the flour is between 15 and 30% by weight of the dry flour.
8. The process of embodiment 26, wherein the time at target temperature is between 30 and 120 minutes.
9. The process of embodiment 5, wherein the moisture is kept substantially constant during heating.

### EXAMPLES

The following examples are presented to further illustrate and explain the present invention and should not be taken as limiting in any regard. All parts and percentages are given by weight and all temperatures in degrees Celsius (°C) unless otherwise noted.

The following ingredients were used throughout the examples.
a) Waxy Rice Flour (WRF), commercially available from Bangkok Industries (Bao Kao Den, Thailand), 1.2% amylose
b) Low Amylose Rice Flour, commercially available from Riviana Foods (Houston, TX, USA) as RM-100AR, batch #7519, 12.8% amylose
c) Singapore Regular Rice Flour (RRF), commercially available from Bangkok Industries (Bao Kao Den, Thailand), 22.4% amylose

The following test procedures were used throughout the examples.

### A. Thermal Analysis

Thermal analysis of the native and heat moisture treated flours was performed using Perkin Elmer Differential Scanning Calorimeter (DSC) 7 with liquid nitrogen cooling accessory. 10 mg of anhydrous sample was weighed into a stainless steel hermetic pan and appropriate amount of water was added to obtain 3:1 water to flour ratio. The pan was sealed and scanned from 10-160°C at 10°C/min heating rate. The samples were run in duplicates and the average values of onset, peak and end melting temperatures (°C) and gelatinization enthalpy values (J/g) are reported.

### B. Rheology

### Method B1: Cooking at 95°C without controlled bath

Rheological tests were conducted on starch dispersions obtained by heating a slurry of flour (9% solids, on anhydrous basis, in a pH 3 buffer) in a water bath set to 95°C for 20 minutes. After cooking, the mass loss due to evaporation was corrected for. Samples expected to gel were poured into molds while hot. The sample was then cooled to room temperature and tested on a rheometer. The rheometer was a Rheometrics Fluids Spectrometer III (Rheometrics Scientific, Piscataway, N.J.). All measurements were made using parallel plate geometry. An oscillatory frequency sweep was conducted on the sample over a range of 1.0 rad/sec to 100 rad/sec, with a strain in the linear-viscoelastic window of the sample. The linear viscoelastic strain, γ, is defined as a strain which is small enough not to disrupt the structure of the material being tested. Resulting profiles of G', G" are measured and the tan delta is calculated from the ratio of G" to G'. Elastic modulus and tangent delta values reported are at a frequency of 10 radians/second.

### Method B2: Cooking at 95°C in a controlled bath

Samples were bath cooked at 95°C in a controlled bath (Lauda E100, Ecoline Star edition) so as to maintain the temperatures accurately (± 0.02°C). All flour samples were cooked at 9% solids (anhydrous) for 20 minutes in pH=3 buffer. After cooking the mass loss due to evaporation was corrected for with DI water. For materials that were expected to gel, samples were prepared in molds for rheological testing. After cooking in the boiling water bath they were poured into molds while hot. The molds consist of a metal plate of size 7.5cm X 7.5cm and 1mm thickness. A rubber of the same size and thickness is placed on this plate and sealed with oil. The rubber has a round hole cut out in the center and has diameter of 50mm. Samples were used hot to dispense due to ease of use in handling. After cooling the samples were covered with mylar film and then left to sit on the bench top for ∼2 hours before testing on the rheometer.

Rheological properties were measured on the samples ∼ 2 hours after they were cooked. All samples were tested on the Rhios RFS III rheometer from Rheometric Scientific. Parallel plate geometry of diameter 50mm was used with a gap size of 1.5mm. Both dynamic and steady data were collected. Samples were tested in duplicate to ensure good reproducibility. The appropriate amount of sample was loaded onto the rheometer using a plastic spatula. After setting the gap size, the sample is trimmed around the plate with a plastic spatula to remove excess material. The sample is then covered with 50cps silicon oil to prevent drying during the test. For materials that are gelled only dynamic data is collected on the samples.

The following standard rheology sequence was used
(i) dynamic strain sweep: strain 0.1% -100%. When an appropriate strain is obtained the test is stopped. @25°C
(ii) dynamic frequency sweep: freq. 1-100 rad/s @25°C
(iii) transient step rate: shear rate= 1.0 (1/s), zone time=120sec. @25°C
(iv) steady rate sweep: rate= 1-100 (1/s) delay before measure=40secs. @25°C

### C. Absorbance:

### Method C1: Materials from cook method B1

Flour sample was cooked at 9% flour solids (anhydrous basis), in 1% NaCl solution at 95°C without a controlled bath. The cook was then diluted to 1% flour solids and 100 gms is poured into a 100ml graduated cylinder. The solvent for diluting was also a 1% NaCl solution. After 24 hours, the inhibited materials (sediments) and the uninhibited materials stays in the supernatant. The turbidity of the supernatant can provide a measure of the uninhibited material. This was measured as the absorbance at a wavelength of 700nm. on a Spec 21D (Milton Roy, Rochester, NY), using a cuvette with a 1cm path length.

### Method C2: Materials from cook method B2

Flour sample was cooked at 9% flour solids (anhydrous basis), in pH=3.0 buffer according to method B2 as described above. Samples were cooked in a controlled bath at 95°C. The cook was then diluted to 1% flour solids and 100 gms is poured into a 100ml graduated cylinder. The solvent for diluting was also pH=3.0 buffer. After 24 hours, the inhibited materials (sediments) and the uninhibited materials stays in the supernatant. The turbidity of the supernatant can provide a measure of the uninhibited material. This was measured as the absorbance at a wavelength of 700nm. on a Spec 21D (Milton Roy, Rochester, NY), using a cuvette with a 1cm path length.

### D. Brabender Viscosity

A Brabender viscoamylograph at neutral conditions (pH 6.5) was run to measure the viscosity profile of rice flours. 9% slurry solids (anhydrous) based on the flour solids was used. 41.4 anhydrous grams of flour was added in a tared plastic beaker with stirring rod. Buffer solution to a total weight of 83.0 ± 1.0 grams of starch and buffer solution was added and mixed thoroughly to form a smooth paste. Then, sufficient buffer solution was added to bring the total charge weight to 460.0 grams. The slurry was mixed well with the stirring rod and added to a Brabender Viscoamylograph bowl. The following temperature profile was run to measure the viscosity with a 700 cmg sensitivity cartridge. Initial temperature was set to 50°C and then a controlled heating of 1.5°C/min heating rate was applied to a maximum temperature of 92°C. A 15 min hold period at 92°C was applied at the end. Brabender viscosity, measured in Brabender Units (BU) was plotted against time and temperature.

*Preparation for the buffer solution:* Buffer solution (pH 6.5) is used in place of distilled water and is prepared as follows:
Solution A - 0.2 M Na2HPO4 prepared by dissolving 28.39 grams of anhydrous disodium phosphate (sodium phosphate, dibasic) to 1 liter with distilled or deionized water in a volumetric flask.
Solution B - 0.1M Citric Acid prepared by dissolving 21.01 grams of citric acid, monohydrate to 1 liter with distilled or deionized water in a volumetric flask. Mix 710 mL of solution A with 290 mL of solution B to make the pH 6.5 buffer mixture.

### E. Amylose content by potentiometric titration

0.5 g of a starch (1.0 g of a ground grain) sample was heated in 10mls of concentrated calcium chloride (about 30% by weight) to 95°C for 30 minutes. The sample was cooled to room temperature, diluted with 5 mls of a 2.5% uranyl acetate solution, mixed well, and centrifuged for 5 minutes at 2000 rpm. The sample was then filtered to give a clear solution.

The starch concentration was determined polarimetrically using a 1 cm polarimetric cell. An aliquot of the sample (normally 5 mls) was then directly titrated with a standardized 0.01 N iodine solution while recording the potential using a platinum electrode with a KCI reference electrode. The amount of iodine needed to reach the inflection point was measured directly as bound iodine. The amount of amylose was calculated by assuming 1.0 gram of amylose will bind with 200 miligrams of iodine. The percent error on the amylose test is +/- 1% in the amylose range below 20%. At higher amylose percents the error could be higher.

### F. Texture Evaluations

All samples were evaluated for texture based on the ballot set forth below.

Cook starch and bring to room temperature
SIZE OF CUP: To be determined by application. For cooks recommendation is about 118 ml (4 oz) clear plastic cup

### UNIVERSAL SCALE

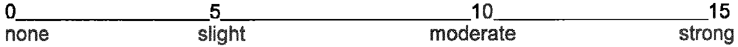

First look at starch in cup and evaluate for the following appearance attributes

### Opacity

Definition: the degree to which the starch is cloudy (degree of cloudiness). Technique: Use white plastic stir rod and put it up against the side of the container as shown in the picture. The rod can be moved towards the center for better judgment.

| **Rating** | **Description** | **Sample** |
|---|---|---|
| 0 | No opacity- Clear/Translucent | DI Water |
| 5 | Slight Opacity/Turbidity | 0.375% whole milk solution |
| 10 | Moderate Opacity/Turbidity | 5% whole milk solution |
| 15 | Strong Opacity | Whole milk |

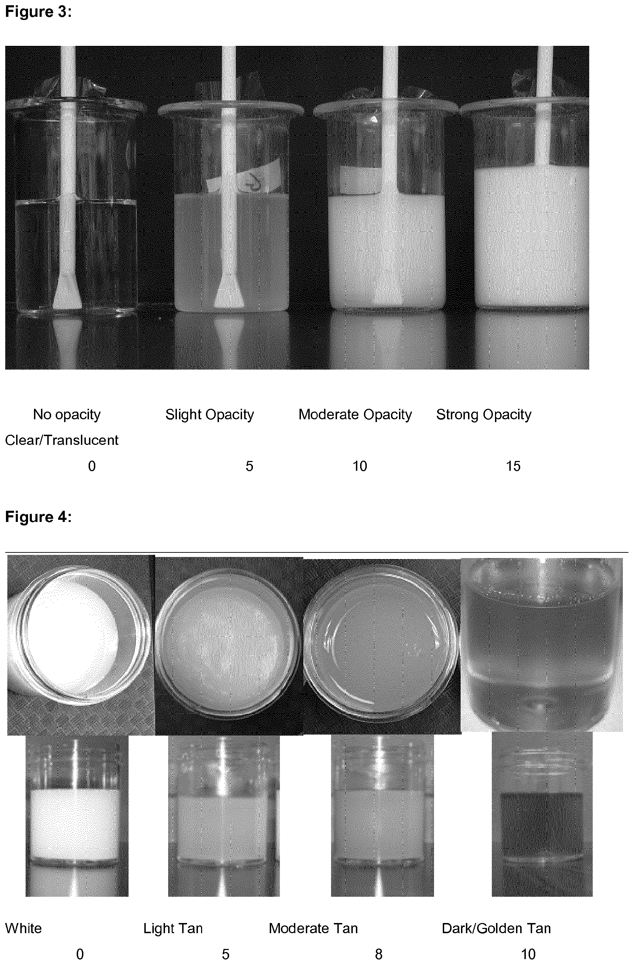

A depiction of the opacity ratings of 0, 5, 10 and 15 is provided in figure 3.

### Color

Definition: white to dark tan.

| **Rating** | **Description** | **Sample** |
|---|---|---|
| 0 | White | Titanium Dioxide Solution |
| 5 | Light tan | NOVATION® 8600 starch |
| 8 | Moderate tan | unwashed NOVATION® 2300 starch |
| 15 | Dark/Golden tan | Honey |

A depiction of the color ratings of 0, 5, 8 and 10 is provided in figure 4.

### Gloss/Shine

Definition: degree to which it reflects light.

Technique: Evaluate the amount of shine seen on the surface of the product by tilting the container back and forth against the light.

| **Rating** | **Description** | **Sample** |
|---|---|---|
| 5 | Slight Gloss/Shine | NOVATION® 1900 starch |
| 10 | Moderate Gloss | NOVATION® 8600 starch |
| 15 | Strong Gloss/Shine | Honey, or Jello-Gelatin |

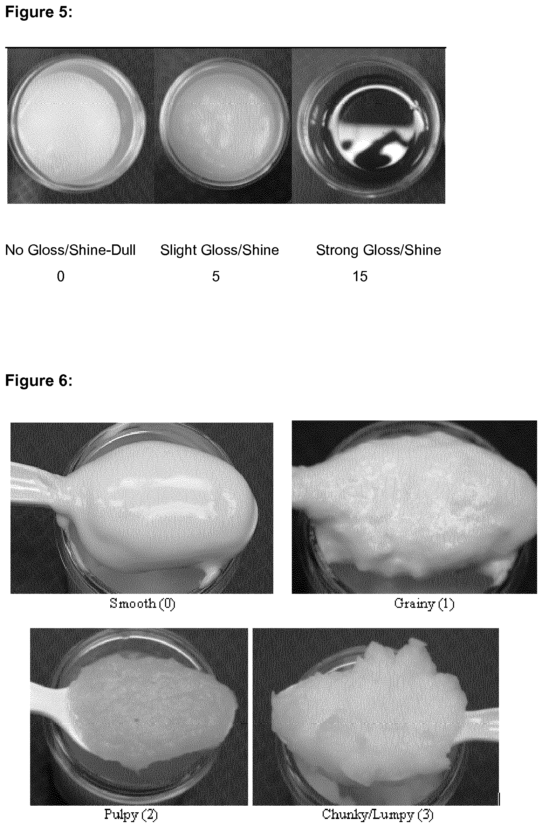

A depiction of the gloss/shine ratings of 5, 10 and 15 is provided in figure 5.

### STIR GEL 5 TIMES

### Grainy/Pulpy/Chunky

Indicate category as 0, 1, 2, 3

| **Category** | **Definition** | **Reference** |
|---|---|---|
| 0 | Smooth - no grain/pulp/chunks | Pudding |
| 1 | Grainy - small, uniform, rounded particles | Dannon Fat Free Yogurt |
| 2 | Pulpy - soft, plastic, wet particles | Motts Apple Sauce |
| 3 | Chunky/Lumpy - large irregular particles | Melojel |

A depiction of the grainy/pulpy/chunky ratings of 0, 1, 2 and 3 is provided in figure 6.

If product is grainy, rate further according to below scale.

**Grainy - small, uniform, rounded particles**

| **Rating** | **Definition** | **Reference** |
|---|---|---|
| 0 | Smooth | Pudding |
| 5 | Slightly Grainy | Dannon Fat Free Yogurt |
| 15 | Very Grainy | Ricotta Cheese |

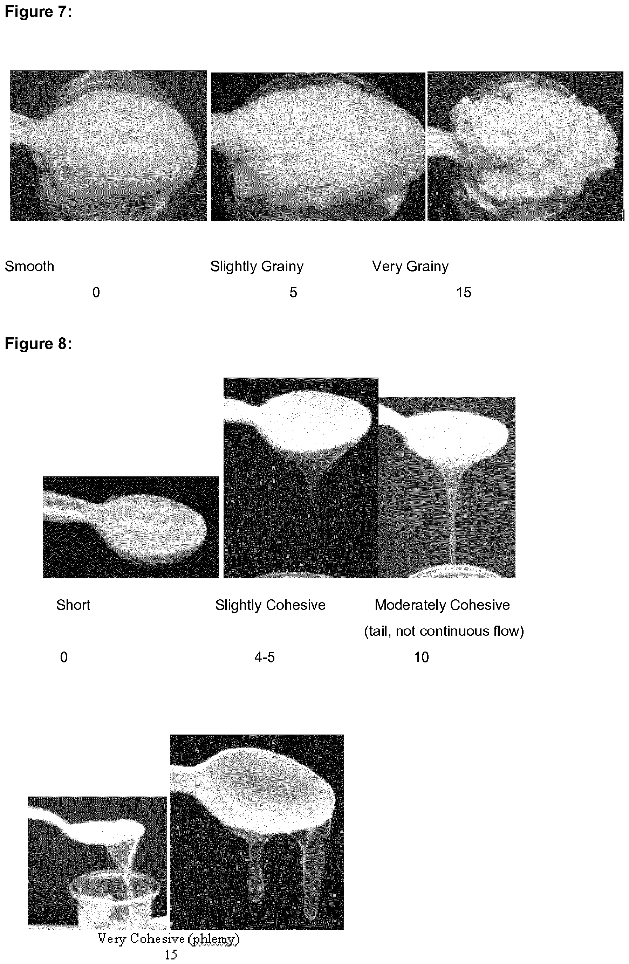

A depiction of the grainy/pulpy/chunky ratings of 0, 5 and 15 is provided in figure 7.

### STIR 20 TIMES

Repeat using references as above cited for 5 stirs

### EVALUATION OF VISCOUS (SPOONABLE) MATERIAL

### Stir product and rate for

### Viscosity

Definition: Force required to move spoon through the material

| **Rating** | **Description** | **Reference** |
|---|---|---|
| 0 | No viscosity | Water |
| 5 | Slight viscosity | THERMTEX® starch or WNA |
| 8.5 | Moderate viscosity | COLFLO® starch |
| 12 | High viscosity | FIRMTEX® starch |

**Take heaping spoonful raise about** 10.16 - 15.24 cm (4-6 inches) **above beaker -let material flow off spoon into beaker and measure for**

### Cohesiveness

Definition: The degree to which the material deforms before it ruptures or breaks

| **Rating** | **Definition** | **Reference** |
|---|---|---|
| 0 | Short | COLFLO® 67 starch |
| 4-5 | Slightly cohesive | NOVATION® 2600 starch |
| 10 | Moderate cohesive (tail, not continuous flow) | NOVATION® 2700 starch |
| 15 | Very cohesive (phlemy) | Waxy corn, tapioca, potato |

A depiction of the cohesiveness ratings of 0, 4-5, 10 and 15 is provided in figure 8.

### Materials and Methods information

### For Opacity References

*Whole Milk Solutions:* specified % whole milk in distilled water

### For color, and gloss/shine References

Container: about 118 ml (4 oz) plastic containers.

**Sample size:** 80g starch cook or container filled ¾.

*Titanium Dioxide Solution:* 0.05% of a 50% Titanium Dioxide Solution (Warner Jenkinson, Lot # 21885BD)
NOVATION® 8600 starch (batch FEX-7560), unwashed NOVATION® 2300 starch (batch ABC-046, NOVATION® 1900 starch (batch DKC-066): 5% solids (anhydrous) in distilled water, prepared by bath cooking at 98°C water temperature for a total time of 20 minutes. After dispersing the starch in 1% NaCl solution the sample was placed in the hot water bath, stirred for three minutes until the starch gelatinized, then covered and left to cook for the remaining 17 minutes. After cooking, the mass loss due to evaporation was corrected for with DI water. The samples were transferred hot into the about 118 ml (4 oz) container and left to cool down undisturbed without a lid.

*NOVATION*® *1900 starch(batch DKC-066):* prepared as above, with skin after 24hrs.
*Honey:* Golden Blossom Honey, Genuine Natural Pure Honey, John Paton Inc, Sole Distributors, PA

### For Grainy/Pulpy/Chunky References

*Dannon Fat Free Yogurt:* stir 20 times to break up any gelled/lumpy structure.

*MELOGEL*® *starch:* 6.6% solids (as is) in distilled water, prepared by cooking in boiling water bath (98C) for 20 minutes (stirring for first -3 min.), and go through 1/more F/T cycles.

### For Viscosity References

*THERMTEX*®*, WNA, COLFLO*® *67, and FIRMTEX*® *starches:* 6.6% solids (as is) in distilled water, prepared by cooking in boiling water bath (98C) for 20 minutes (stirring for first ∼3 min.)

### For Cohesiveness References

*COLFLO*® *67, NOVATION*® *2600, NOVATION*® *2700, Waxy corn*/*Tapioca*/*Potato starches:* 6.6% solids (as is) in distilled water, prepared by cooking in boiling water bath (98C) for 20 minutes (stirring for first ∼3 min.). Microscopic evaluation of cooks should indicate the following

| | |
|---|---|
| 20 min. Starch Cook COLFLO® 67 starch | Microscopic evaluation - cook type Good cook = -80% fully swollen, 10% undercooked, 10% fragmented granules |
| NOVATION® 2600 starch | Slightly overcooked = -70% swollen, 5% undercooked, 25% fragmented granules |
| NOVATION® 2700 starch | Moderately overcooked = ∼50% swollen, 0% undercooked, 50% fragmented granules |
| Waxy corn/Tapioca/Potato starch | Extremley overcooked = -10% fully swollen, 0% undercooked, 90% fragmented granule |

### G. Brookfield Viscosity

A jar of about 118 ml (4 oz) was filled with apple baby food. Viscosity was measured at room temperature using a Brookfield DV-II+, "B" t-bar (#92), heliopath OFF, 15 second measurment in centipoise at 10rpms.

### H. Bostwick Consistometer

The Bostwick Consistometer consists of a level, stainless-steel trough with two compartments. The first compartment, which holds the sample to be tested, is separated from the second compartment by a spring-loaded gate. The second compartment is 24 cm long and has graduated, parallel lines at 0.5 cm intervals. The measurement consists of releasing the gate and letting the fluid flow freely under gravity down the slope. The distance the fluid flows from the gate after 5, 15, 30 and 60 seconds is measured in centimeters as the Bostwick Consistometer reading.

### Example 1 - Heat moisture treatment of waxy, low amvlose and regular rice flours

This example shows the method for heat moisture treatment of flours.
a. Fine mist of water was sprayed on 1500 g of low amylose rice flour (LARF, amylose content - 12%; RM100AR - lot # 7519) while mixing it in a Kitchen Aid mixer at number 2-3 speed. Moisture of the flour was checked intermittently during the spraying by the Cenco moisture balance. The flour powder was adjusted to four different final moisture contents of 15, 20, 25, and 30%. It was further mixed for 1 hr to ensure moisture uniformity. About 200 grams of moist flour was then sealed in aluminum cans with less than 2.54 cm (1 inch) head space. The sealed aluminum cans were placed in ovens already at the desired temperatures of 75°C, 90°C, 95°C, 100°C, and 120°C for the heat moisture treatment. There was 30 minute ramp up time to allow the sample temperature inside the cans to equilibrate with the outside oven temperature. The sample was further held at that temperature for 2 hours. After the heat-moisture treatment, the cans were opened and the heat moisture treated (HMT) flours were air-dried at room temperature. The dry samples were ground to fine powder using a coffee grinder and sieved using a US mesh 20 screen (0.841mm sieve opening). Samples were subsequently characterized for thermal and rheological properties.
b. Example 1a was repeated for waxy rice flour except that the moisture was adjusted to 25% and was then heat treated at 95°C.
c. Example 1a was repeated for regular rice flour except that the moisture was adjusted to 20% and was then heat treated at 100°C.

**Table 1: Thermal analysis of the native and heat moisture treated flours was performed using DSC. The average values are reported below.**

| **Sample #** | **Base Material** | **Temp (°C)** | **Moisture (%)** | **Time (hr)** | **To (°C)** | **Tp (°C)** | **Tc (°C)** | **Delta H (J/g)** |
|---|---|---|---|---|---|---|---|---|
| 1 | Low amylose rice flour* | - | - | - | 60.2 | 71 | 81.2 | 13.1 |
| 2 | Low amylose rice flour | 90 | 25 | 2 | 66.7 | 75.1 | 85.2 | 11.7 |
| 3 | Low amylose rice flour | 95 | 20 | 2 | 63.2 | 72 | 83.6 | 12 |
| 4 | Low amylose rice flour | 95 | 25 | 2 | 67.3 | 77.3 | 87.8 | 11.9 |
| 5 | Low amylose rice flour | 100 | 20 | 2 | 65.8 | 74.6 | 85.2 | 12.1 |
| 6 | Low amylose rice flour | 100 | 25 | 2 | 68 | 79 | 88.5 | 10.3 |
| 7 | Low amylose rice flour | 110 | 20 | 2 | 65.2 | 73.8 | 85.5 | 12.5 |
| 8 | Low amylose rice flour | 110 | 25 | 2 | 66.6 | 80.8 | 90.2 | 8.3 |
| 9 | Low amylose rice flour | 120 | 20 | 2 | 65.5 | 75.8 | 87.4 | 11.2 |
| 10 | Low amylose rice flour | 120 | 25 | 2 | 66.3 | 77.8 | 90.1 | 8.1 |
| 11 | Regular amylose rice flour* | - | - | - | 71.8 | 78.1 | 87.1 | 20.1 |
| 12 | Regular amylose rice flour* | 100 | 25 | 2 | 79.1 | 85.3 | 89.9 | 17.4 |
| 13 | Regular amylose rice flour* | 120 | 20 | 2 | 73.9 | 79.6 | 89.3 | 14 |

| | | | | | | | | |
|---|---|---|---|---|---|---|---|---|
| * = Reference | | | | | | | | |

Heat moisture treated low amylose rice flour showed high viscosity and desired texture in application. As shown in table 1, heat moisture treatment of the amylose-containing flour shows significant changes in the thermal properties. Heat moisture treated low amylose rice and regular rice flours have higher onset and peak melting temperatures than the untreated native flours. Heat moisture treated flours having higher melting temperatures would resist swelling and show delayed gelatinization during cooking. Therefore, inhibition of flours can be achieved via annealing using the heat moisture treatment process. Flours treated at various heat moisture conditions with different thermal properties may provide different degrees of inhibition.

### Example 2 - Physical properties of Heat-Moisture Treated Flours

### Example 2a) (Reference)

This example illustrates the physical properties of the heat moisture treated rice flours and native rice flours. The data depicted in Table 2A (prepared from cooking method B1) demonstrate that the heat moisture treated low amylose rice flours show higher elastic modulus and lower tangent delta than the untreated native flour. For example, samples 22, 2, 23, and 10 show higher elastic modulus than the untreated native low amylose rice flour. In contrast, waxy rice flour (sample 26) and regular rice flour (sample 27) do not show a significant improvement in elastic modulus or tangent delta over the respective native flours (samples 25, 11).

**Table 2A: Preparation of heat moisture treated flours, and physical properties based on cooking procedure B1.**

| Sample # | Base Material | Temp (C) | Moisture (%) | Time (minutes) | G'(Pa) | Tan delta | Absorbance |
|---|---|---|---|---|---|---|---|
| 1 | Low Amylose Rice* | | | | 6.51 | 1.24 | 0.5 |
| 22 | Low Amylose Rice* | 90 | 15 | 120 | 14.36 | 0.94 | 0.388 |
| 2 | Low Amylose Rice* | 90 | 25 | 120 | 14.56 | 0.94 | 0.384 |
| 23 | Low Amylose Rice* | 120 | 15 | 120 | 77.52 | 0.37 | 0.1 |
| 10 | Low Amylose Rice* | 120 | 25 | 120 | 62.07 | 0.42 | 0.141 |
| 24 | Low Amylose Rice* | 75 | 30 | 120 | 11.12 | 0.96 | 0.549 |
| | | | | | | | |
| 25 | Waxy Rice* | | | | 3.03 | 1.86 | 0.5 |
| 26 | Waxy Rice* | 95 | 25 | 120 | 4.41 | 1.41 | 0.211 |
| | | | | | | | |
| 11 | Regular Rice* | | | | 277.16 | 0.12 | 0.169 |
| 27 | Regular Rice* | 100 | 20 | 120 | 124.5 | 0.21 | 0.212 |

| | | | | | | | |
|---|---|---|---|---|---|---|---|
| * = Reference | | | | | | | |

Example 2b) It should be noted that numerically identified samples labeled "b" are the same as those without the "b" (e.g. 27 and 27b are the same sample). The "b" simply denotes that the test was done at a separate time.

**Table 2B- Preparation of heat moisture treated flours, and physical properties based on cooking procedure B2.**

| Sample # | Base Material | Temp (C) | Moisture (%) | Time (minutes) | G'(Pa) | Tan delta | Absorbance |
|---|---|---|---|---|---|---|---|
| 1 | Low Amylose Rice* | | | | 230.04 | 0.22 | 0.189 |
| 17b | Low Amylose Rice | 100 | 20 | 120 | 350.87 | 0.19 | 0.115 |
| 28 | Low Amylose Rice | 100 | 25 | 120 | 329.83 | 0.19 | 0.133 |
| 11 | Regular Rice* | | | | 830.57 | 0.07 | |
| 27b | Regular Rice* | 100 | 20 | 120 | 1034.94 | 0.07 | |
| 12b | Regular Rice* | 100 | 25 | 120 | 1120.87 | 0.07 | |

| | | | | | | | |
|---|---|---|---|---|---|---|---|
| = Reference | | | | | | | |

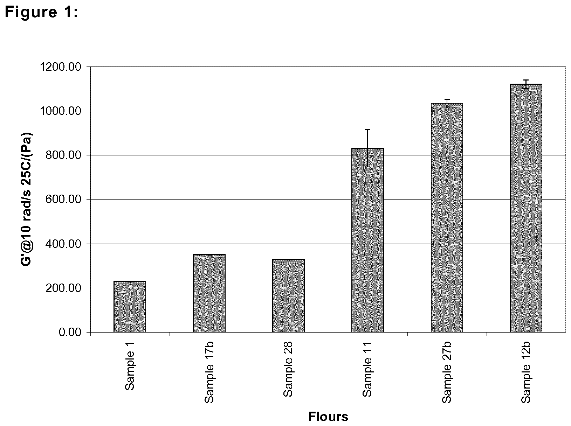

At 12.8% amylose the heat moisture treated flours (sample # 17b and # 28) had higher stiffness than the control base flours (sample #1). The heat moisture treated regular rice flours (sample #27b and #12b) had significantly higher stiffness than sample 17b and sample 28. These samples (11, 27b, and, 12b) also exhibit a soft gel texture which is quite different from the textures of samples 1, 17b, and 28. This is represented in Fig 1 and Table 2B.

### Example 3 - Granular integrity of Heat-Moisture Treated Flours

This example illustrates the increase in granular integrity achieved (as measured by decrease in absorbance) *via* heat moisture treatment of flour.

Table 2A shows absorbance data for heat moisture treated flours. As shown, the heat moisture treated flours show lower absorbance as compared to the native flours, indicating a higher degree of granular integrity, which contributes to desirable physical properties of the cook. Table 2B shows the data for heat moisture treated flours using cooking procedure B2 as explained above.

Texture Evaluations:

**Table 3: Texture evaluation of flour using cooking procedure B2 (boiling water bath study**

| **Sample #** | **Opacity** | **Color** | **Gloss/Shine** | **Grainy/pulpy/chunky** | **Grainy** | **Viscosity** | **Cohesiveness** |
|---|---|---|---|---|---|---|---|
| 1* | 10 | 3 | 0 | 1 | 5 | 7 | 4--5 |
| 17 | 15 | 0 | 0 | 1 | 7 | 7 | 0 |
| 28 | 15 | 0 | 0 | 1 | 7 | 7 | 0 |
| 11* | n/a | n/a | n/a | n/a | n/a | soft gel | n/a |
| 27b* | n/a | n/a | n/a | n/a | n/a | soft gel | n/a |
| 12b* | n/a | n/a | n/a | n/a | n/a | soft gel | n/a |

| | | | | | | | |
|---|---|---|---|---|---|---|---|
| * = Reference | | | | | | | |

The texture evaluations in table 3 above supports example 2b above. All food products prepared with regular rice flour samples with an amylose content of 22.7 % were gelled (samples 11, 27b and 12b). In contrast, food product prepared with low amylose containing rice flour samples did not gel. It should be noted that, because of the intensity of gel formation observed for flour samples made from regular rice, it was not possible to evaluate the products for the chosen product criteria. This is indicated by "n/a" statements in Table 3.

### Example 4. Heat moisture treatment of low amylose rice flour at different processing times. (Reference)

This example shows the heat moisture treatment of low amylose rice flours over different periods of time.

45 kg of low amylose rice flour were loaded into a batch process ploughshare mixer and dryer (Model: 300HP Prestovac reactor manufactured by Processall, Cincinnati, OH, USA). The reactor can be pressurized to control the moisture in the flour at temperatures above 100 °C. The flour was fluidized through the mixing action and water was sprayed onto the flour to achieve a final moisture content of 19.1%. The reactor was pressurized to 40 psi (2.7 bar) and the moisture adjusted flour was heated to a target product temperature of 100°C. The heat-up time was 1 hr. At the target temperature of 100 °C, the heat treatment was performed for 120 min and samples were taken at 30, 60, 90 and 120 min. All samples were air dried to 10 to 12 % moisture, and sieved through a US 20 mesh screen (0.841mm sieve opening). The samples of heat - moisture treated low amylose rice flour, identified in Table 4 as samples 14 through 17, were evaluated for rheological properties and absorbance (using test methods B1 and C1). The data in Table 4 show that a processing time of 60 to 120 min produced a low amylose rice flour composition with desirable rheological properties as described by the modulus G' and tan delta. Further, the data show that a longer processing time produced compositions with more desirable rheological properties.

**Table 4: Heat moisture treatment of low amylose rice flour over time (30-120 minutes)**

| Sample # | Base Material | Temp (C) | Moisture (%) | Time (minutes) | G'(Pa) | Tan delta | Absorbance |
|---|---|---|---|---|---|---|---|
| 14* | Low Amylose rice | 100 | 20 | 30 | 22.2 | 0.77 | 0.281 |
| 15* | Low Amylose rice | 100 | 20 | 60 | 26.92 | 0.72 | 0.259 |
| 16* | Low Amylose rice | 100 | 20 | 90 | 28.73 | 0.67 | 0.261 |
| 17* | Low Amylose rice | 100 | 20 | 120 | 49.16 | 0.51 | 0.239 |

| | | | | | | | |
|---|---|---|---|---|---|---|---|
| * = Reference | | | | | | | |

### EXAMPLE 5. - Food prepared using heat-moisture treated flour. (Reference)

This example describes the use of heat moisture treated low amylose rice flour in a thickened applesauce formulation. Both, heat moisture treated rice flour and native rice flour were used to prepare retorted thickened applesauce. Results show the increased process tolerance (increased viscosity) of heat moisture treated low amylose rice flour over the native base.

The food was prepared using the below formula:

| **INGREDIENTS** | **%** | **G** |
|---|---|---|
| Apple solids | 69 | 828 |
| Rice flour | 9 | 108 |
| Citric acid | 0.05 | 0.6 |
| Water | 21.95 | 263.4 |
| | | |
| Total | 100 | 1200 |

The preparation was done as indicated below:
Water, rice flour, and citric acid were slurried. Apple solids was added. The mixture was heated to 65.6 °C (150°F) and filled into cans at 60-63 °C (140-145°F). The cans were retorted in Stock Rotary retort at 115.5 °C (240°F) for 35 minutes. The thickened apple sauce was evaluated for viscosity differences. The DV-II+ Brookfield was used to measure the viscosity with the following parameters: "B" t-bar (#92), heliopath off, 15 second measurement in centipoise at 10 RPMs. Bostwick Consistometer measurements were also done. Bostwick Consistometer measures the filling flow in centimeters at various times (in seconds). Lower numbers correspond to higher viscosity.

The results of the applesauce evaluations are tabulated below in Table 5.

**Table 5: Brookfield and Bostwick viscosity data of native and heat moisture treated low amylose rice flours.**

| Sample # | Brookfield Visc | Bostwick | | | |
|---|---|---|---|---|---|
| | (cps) | 5 sec | 15 sec | 30 sec | 60 sec |
| | | | | | |
| 1 (at time =0 hrs.) | 15,400 | 7.2 | 9.25 | 10.5 | 12 |
| 1 (at time=24 hrs.) | 14,200 | 7 | 9.1 | 10.4 | 11.75 |
| | | | | | |
| 17b (at time= 0 hrs.) | 19,100 | 5.7 | 7.1 | 8.3 | 9.4 |
| 17b (at time= 24 hrs.) | 24,200 | 5 | 6.6 | 7.7 | 8.7 |

The results show that the heat moisture treated low amylose rice flour yields applesauce with higher viscosity after retorting. The heat moisture treated low amylose rice flour has acid and heat stability superior to native rice flour.

### Example 6 - Comparison of heat moisture treated low amylose rice flour with heat moisture treated blends of waxy and regular rice flours (Reference)

This example shows the physical properties obtained by heat-moisture treated blends of non-amylose containing rice flour (amylose content < 3 %) and regular-amylose containing rice flours (amylose content of 22 %), and compares them to properties of heat-moisture treated low-amylose rice flour. Heat-moisture treated low amylose rice flour, processed at 20 % moisture and 100 °C, was compared to (50:50 w/w) blends of waxy rice flour and regular rice flour, heat - moisture treated at the same conditions. At this blend ratio, the amylose level, calculated with 12.5 %, was comparable to that in the low amylose rice flour (12.8 %). Two techniques were used for preparing the samples:
(i) pre-blending the flours followed by heat-moisture treatment (sample 20)
(ii) heat-moisture treating the individual components and then blending together (sample 21)

The samples were characterized using test methods B1 and C1. Data are shown in Table 6. It can be seen that all the blends show lower elastic modulus and higher tangent delta as compared to the heat - moisture treated low amylose rice flour. The regular amylose rice flour showed an undesirable gelled texture, resulting in too high elastic modulus, and too low tangent delta.

**Table 6: Characterization of rice flour blends**

| Sample # | Description | Temp (C) | Moisture (%) | Time (minutes) | G'(Pa) | Tan delta | Absorbance |
|---|---|---|---|---|---|---|---|
| 18* | Waxy Rice | 100 | 25 | 120 | 5.25 | 1.29 | 0.203 |
| 12* | Regular Rice | 100 | 25 | 120 | 313.59 | 0.1 | 0.095 |
| 19* | 50:50 waxy:regular | | | | 15.65 | 0.81 | 0.261 |
| 20* | 50:50 waxy:regular (preblended) | 100 | 25 | 120 | 17.36 | 0.79 | 0.213 |
| 21* | 50:50 waxy:regular (post-blended) | 100 | 25 | 120 | 21.61 | 0.68 | 0.209 |
| 6* | Low Amylose Rice | 100 | 25 | 120 | 71.71 | 0.39 | 0.298 |

| | | | | | | | |
|---|---|---|---|---|---|---|---|
| * = Reference Note: Samples analyzed and cooked under method B1 conditions. | | | | | | | |

### Example 7: Impact of heat moisture treatment on inhibition and process tolerance of waxy rice flour and low amylose rice flour

This example shows the impact of heat moisture treatment on the inhibition of low amylose rice flour as measured by the Brabender viscosity under neutral conditions (pH - 6.5) and compares it to heat - moisture treated waxy rice flour. It is known in the art that a non-inhibited starch or starch containing composition shows a peak viscosity and a subsequent breakdown in viscosity upon holding the composition at a cook temperature as defined in respective Brabender procedures. In contrast, inhibited process tolerant compositions show no breakdown or a continuous rise in viscosity.

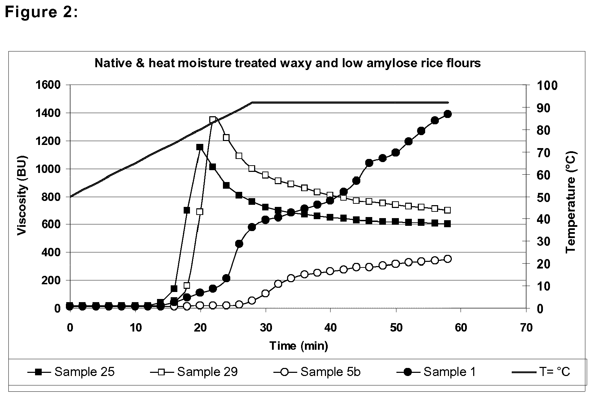

As illustrated in figure 2, heat moisture treated Waxy rice flour does not show inhibition as indicated by breakdown in viscosity at the 92°C hold (sample 29 - moisture 20%, 100°C for 2 hrs hold time). Contrary, heat - moisture treated low amylose rice flour shows a rise in viscosity which is typical for an inhibited composition (sample 5b). Further, the product shows a significantly delayed gelatinization temperature and sustained viscosity at 92°C. By manipulating the heat moisture process, flours inhibited to different degrees would provide process tolerance in food applications.

## Claims

1. A non-gelling amylose-containing rice flour **characterized by**:
i. an absorbance value of less than 0.2 and greater than 0.1 by Absorbance method C2;
ii. a G' of greater than 250Pa and less than 600Pa;
iii. a tan delta of greater than 0.10 and less than 0.50;
wherein the modulus and tangent delta are measured using Rheology Method B2, wherein the starch in the flour retains its granular structure and
wherein the flour is a rice flour with an amylose content of from 5 to 15% by weight of starch in the flour.

2. The flour of claim 1, wherein the amylose content is from 13 to 15% by weight of starch in the flour.

3. The flour of claim 1, wherein the flour is not chemically modified.

4. A composition comprising the flour of claim 1, and at least one other edible component.

5. A process of heat-treating flour for the production of a non-gelling amylose-containing rice flour according to claim 1 comprising:
heating a rice flour under the conditions of a moisture content of between from 10 to 80% by weight of the dry flour, at a target temperature of from 80 to 120°C, and a time of 1 to 150 minutes at the target temperature to form a heat-treated flour;
wherein the conditions are chosen so that the starch in the flour retains its granular structure;
wherein the heat-treated flour is **characterized by** an absorbance value of less than 0.2 and greater than 0.1 by Absorbance Method C2, a G' of greater than 250Pa and less than 600Pa, and a tan delta of greater than 0.10 and less than 0.50; wherein the modulus and tangent delta are measured using Rheology Method B2, and
wherein the flour is a rice flour with an amylose content of from 5 to 15% by weight of starch in the flour.

## Patentansprüche

1. Nichtgelierendes, amylosehaltiges Reismehl,
**gekennzeichnet durch**:
i. einen Absorptionswert von geringer als 0,2 und größer als 0,1 nach Absorptionsverfahren C2;
ii. ein G' größer als 250Pa und geringer als 600Pa;
iii. einem tan delta größer als 0,10 und geringer als 0,50;
wobei der Modul und Tangens delta unter Verwendung des Rheologieverfahrens B2 gemessen werden,
wobei die Stärke in dem Mehl ihre granulare Struktur behält und
wobei das Mehl ein Reismehl mit einem Amylosegehalt von 5 bis 15%, bezogen auf das Gewicht der Stärke in dem Mehl, ist.

2. Mehl nach Anspruch 1, wobei der Amylosegehalt 13 bis 15 %, bezogen auf das Gewicht der Stärke in dem Mehl, beträgt.

3. Mehl nach Anspruch 1, wobei das Mehl chemisch nicht modifiziert ist.

4. Zusammensetzung, umfassend das Mehl nach Anspruch 1 und mindestens eine weitere, essbare Komponente.

5. Verfahren der Wärmebehandlung von Mehl zur Herstellung eines nichtgelierenden, amylosehaltigen Reismehles nach Anspruch 1, umfassend:
Erwärmen eines Reismehles unter den Bedingungen eines Feuchtigkeitsgehaltes zwischen von 10 bis 80%, bezogen auf das Gewicht des trockenen Mehles, auf eine Zieltemperatur von 80 bis 120°C und eine Zeit von 1 bis 150 Minuten bei der Zieltemperatur, um ein wärmebehandeltes Mehl zu bilden;
wobei die Bedingungen derart gewählt sind, dass die Stärke in dem Mehl ihre granulare Struktur behält;
wobei das wärmebehandelte Mehl durch einen Absorptionswert von geringer als 0,2 und größer als 0,1 nach Absorptionsverfahren C2, einem G' größer als 250Pa und geringer als 600Pa und einem tan delta größer als 0,10 und geringer als 0,50 gekennzeichnet ist;
wobei der Modul und Tangens delta unter Verwendung des Rheologieverfahrens B2 gemessen werden,
und
wobei das Mehl ein Reismehl mit einem Amylosegehalt von 5 bis 15%, bezogen auf das Gewicht der Stärke in dem Mehl, ist.

## Revendications

1. Farine de riz non gélifiante contenant de l'amylose **caractérisée par** :
i. une valeur d'absorbance inférieure à 0,2 et supérieure à 0,1 par le procédé d'Absorbance C2 ;
ii. un G' supérieur à 250 Pa et inférieur à 600 Pa ;
iii. une tan delta supérieure à 0,10 et inférieure à 0,50 ;
dans laquelle le module et la tangente delta sont mesurés en utilisant le Procédé de Rhéologie B2,
dans laquelle l'amidon dans la farine conserve sa structure granulaire et
dans laquelle la farine est une farine de riz ayant une teneur en amylose allant de 5 à 15 % en poids d'amidon dans la farine.

2. Farine de la revendication 1, dans laquelle la teneur en amylose est comprise entre 13 et 15 % en poids d'amidon dans la farine.

3. Farine de la revendication 1, dans laquelle la farine n'est pas chimiquement modifiée.

4. Composition comprenant la farine de la revendication 1 et au moins un autre composant comestible.

5. Procédé de traitement thermique de la farine pour la production d'une farine de riz non gélifiante contenant de l'amylose selon la revendication 1 comprenant le fait :
de chauffer une farine de riz dans les conditions d'une teneur en humidité comprise entre 10 et 80 % en poids de la farine sèche, à une température cible allant de 80 à 120°C, et d'une durée allant de 1 à 150 minutes à la température cible pour former une farine traitée thermiquement ;
dans lequel les conditions sont choisies de sorte que l'amidon dans la farine conserve sa structure granulaire ;
dans lequel la farine traitée thermiquement est **caractérisée par** une valeur d'absorbance inférieure à 0,2 et supérieure à 0,1 par le Procédé d'Absorbance C2, un G' supérieur à 250 Pa et inférieur à 600 Pa, et une tan delta supérieure à 0,10 et inférieure à 0,50 ;
dans lequel le module et la tangente delta sont mesurés en utilisant le Procédé de Rhéologie B2, et
dans lequel la farine est une farine de riz ayant une teneur en amylose allant de 5 à 15 % en poids d'amidon dans la farine.
